# EUROPÄISCHE PATENTSCHRIFT

(11) **EP 1 149 353 B1**
(45) Veröffentlichungstag und Bekanntmachung des Hinweises auf die Patenterteilung: **19.06.2013**
(21) Anmeldenummer: 00906239.9
(22) Anmeldetag: 28.01.2000
(51) Int. Cl.: G06F 17/50

(54) **VERFAHREN ZUR ÜBERTRAGUNG VON SIMULATIONSMODELLEN ZWISCHEN SIMULATOREN**
METHOD FOR TRANSMITTING SIMULATION MODELS BETWEEN SIMULATORS
PROCEDE DESTINES A TRANSMETTRE DES MODELES DE SIMULATION ENTRE DES SIMULATEURS

(30) Priorität: 05.02.1999 DE 19906177
(43) Veröffentlichungstag der Anmeldung: 31.10.2001
(73) Patentinhaber: Esterel Technologies, 78990 Elancourt (FR)
(72) Erfinder: AMANN, Notker, D-13503 Berlin (DE); THOMAS, Carsten, D-28203 Bremen (DE); FEY, Ines, D-10409 Berlin (DE); HOFFMANN, Matthias, D-13347 Berlin (DE); JOHN, Gisela, D-13585 Berlin (DE)
(74) Vertreter: Fruchard, Guy
(86) Internationale Anmeldenummer: PCT/EP2000/000657
(87) Internationale Veröffentlichungsnummer: WO 2000/046702

(56) Entgegenhaltungen:
- US-A- 5 390 320
- HOSHINO T ET AL: "Modeling and simulation of mechanical systems - combination of a symbolic computation tool and M/sub A/TX" PROCEEDINGS OF THE 1999 IEEE INTERNATIONAL SYMPOSIUM ON COMPUTER AIDED CONTROL SYSTEM DESIGN (CAT. NO.99TH8404), PROCEEDINGS OF THE 1999 IEEE INTERNATIONAL SYMPOSIUM ON COMPUTER AIDED CONTROL SYSTEM DESIGN, KOHALA COAST, HI, USA, 22-27 AUG. 1999, Seiten 462-467, XP002138639 1999, Piscataway, NJ, USA, IEEE, USA ISBN: 0-7803-5500-8
- CAMPBELL S L ET AL: "A mixed symbolic-numeric software environment" PROCEEDINGS OF THE 1996 IEEE INTERNATIONAL SYMPOSIUM ON COMPUTER-AIDED CONTROL SYSTEM DESIGN (CAT. NO.96TH8136), PROCEEDINGS OF JOINT CONFERENCE ON CONTROL APPLICATIONS INTELLIGENT CONTROL AND COMPUTER AIDED CONTROL SYSTEM DESIGN, DEARBORN, MI, USA, , Seiten 436-441, XP002138640 1996, New York, NY, USA, IEEE, USA ISBN: 0-7803-3032-3
- ANSARI A ET AL: "Process modeller (PROMO)" SIMULATORS INTERNATIONAL XIV. PROCEEDINGS OF THE 1997 SIMULATION MULTICONFERENCE, SIMULATORS INTERNATIONAL XIV. PROCEEDINGS OF THE 1997 SIMULATION MULTICONFERENCE, ATLANTA, GA, USA, 6-10 APRIL 1997, Seiten 137-142, XP000886699 1997, San Diego, CA, USA, SCS, USA ISBN: 1-56555-121-4

## Beschreibung

Die Erfindung betrifft ein Verfahren zur Übertragung von Simulationsmodellen zwischen mindestens zwei Simulatoren, wobei das Simulationsmodell mit einem ersten Ein/Ausgabemittel von dem ersten Simulator an eine Verarbeitungseinheit übertragbar ist.

In der Simulationstechnik gibt es eine Vielzahl von verschiedenen Simulatoren, die die grafische komponentenorientierte Spezifikation von Systemen als dynamisches Signalflußsimulationsmodell sowie die Simulation des dynamischen Verhaltens dieser Simulationsmodelle erlauben. Beispiele für diese Simulatoren sind Simulink, SystemBuild, ControlH, Beacon und Scade. Diese Simulatoren unterscheiden sich in ihrer Funktionalität und Darstellungsmöglichkeit, wobei jeder seine eigenen Vor- und Nachteile hat. So ist beispielsweise die Systemspezifikation in dem einen Simulator besonders gut unterstützt, während in einem anderen Simulator die Simulations- und Analysemöglichkeiten umfangreicher sind.

Eine wichtige und häufige Problemstellung beim Arbeiten mit diesen Simulatoren ist es, Simulationsmodelle, die mit einem Simulator erstellt worden sind, auf einem anderen Simulator zu übertragen. Das ermöglicht die Vorteile verschiedener Simulatoren miteinander zu kombinieren. Durch die Möglichkeit der Übertragung sind eine hohe Kostenersparnis und ein entscheidender Zeitgewinn möglich. Für eine effiziente Arbeit ist es außerdem von großer Bedeutung, die Simulationsmodelle wieder rückzuübertragen, also über einen bidirektionalen Übersetzer zwischen zwei Simulatoren zu verfügen.

Der gegenwärtige Stand der Technik für die Übertragung von Simulationsmodellen basiert auf zwei unterschiedlichen Vorgehensweisen. Das erste Verfahren ist die direkte Übersetzung des Simulationsmodells. Dazu wird ausgehend von der Beschreibung des Simulationsmodells, die für einen Simulator A geschrieben wurde, eine Beschreibung des Simulationsmodells erstellt, die von dem anderen Simulator B gelesen werden kann. Beim Übersetzungsvorgang wird jeder einzelne Operator des Simulationsmodells des Simulators A durch einen entsprechenden Operator des anderen Simulators B ersetzt.

Diese Art der Übersetzung erfordert, daß für jeden einzelnen Operator des Simulator A, der im zu übersetzenden Simulationsmodell benutzt wurde, ein semantisch und syntaktisch äquivalenter Operator im anderen Simulator existiert. Da dies in der Regel nicht gegeben ist, ist diese direkte Art der Übersetzung nur im Ausnahmefall möglich. Häufig wird eine Untermenge von Funktionen definiert, die bei beiden vorhanden ist, und nur diese wird übersetzt.

Zudem unterscheiden sich die Operatoren oft im Detail, so daß zwar eine grundsätzliche Übertragung möglich ist, sich aber das dynamische Verhalten des Simulationsmodells in einem Simulator von dem in einem anderen Simulator unterscheidet.

Ein Beispiel für diese direkte Art der Übersetzung ist der zur Zeit von ISI und Verilog erstellte Simulator zur Übersetzung von SystemBuild nach Scade. ("Codesign Method and Integrated Tools for Advanced Embedded System (COMITY)" (Project reference 23015). Von der Europäischen Union gefördertes Projekt im Rahmen von "Esprit 4", Teil des vierten Rahmenprogramms der Europäischen Union, Unterprogramm: "Software Technologies Software Intensive Systems Engineering").

Das zweite Verfahren für die Übertragung ist die Kommunikation zwischen zwei Simulatoren mittels einer Meta-Beschreibung. Dies heißt, daß durch eine Exportfunktion der Simulatoren eine Beschreibung des Simulationsmodells erstellt wird, die von beiden Simulatoren gelesen und geschrieben werden kann. Diese Meta-Beschreibung spezifiziert eine Beschreibungssprache, die dann dazu verwendet wird, die eigentlichen Informationen in allgemeiner Art zu beschreiben.

Der lesende Simulator liest erst die Meta-Beschreibung, versucht diese zu verstehen und interpretiert dann anhand dieses Verständnisses die Beschreibung. Problematisch hierbei ist, daß die Interpretationen des schreibenden und lesenden Simulators unterschiedlich sein können. Außerdem können Informationen verloren gehen, da die Simulationsmodelle in der Meta-Beschreibung allgemeiner spezifiziert sind.

Die semantische Identität eines Simulationsmodells in beiden Simulatoren ist nicht gegeben und die verlustfreie Rückübersetzung ist im Regelfall nicht möglich. Hier können Parallelen zu menschlichen Sprachübersetzungen gezogen werden, wo es durch Übersetzungsvorgänge in verschiedene Sprachen häufig zu Veränderungen und Unterschieden zu der ursprünglichen Bedeutung kommt. Ein Beispiel für diese Art der Übertragung ist CDIF, ein Quasi-Standard zum Austausch von Informationen zwischen Simulationsmodellierungssimulatoren und Datenbanken, wie Johannes Ernst in "Data Interoperability between CACSD and CASE Tools Using the CDIF" schreibt.

Es gibt grundsätzlich noch eine weitere Möglichkeit, zumindest das dynamische Verhalten eines Simulationsmodells von einem Simulator zum anderen zu übertragen. Startpunkt ist ein Simulationsmodell, das mit einem Simulator spezifiziert wurde. Im folgenden wird der Quell-Code für das gesamte Simulationsmodell mittels eines automatischen Code-Generators dieses Simulators erzeugt. Der gesamte Quell-Code wird in den anderen Simulator als externes Modul eingebunden. Dadurch geht jedoch jede Strukturinformation verloren; das ursprünglich detaillierte Simulationsmodell wird zu einem einzigen Block. Eine weitere Bearbeitung im zweiten Simulator wird hierdurch unmöglich.

Ferner gehen durch die generelle Codeerzeugung Informationen verloren, wodurch das als externes Modul vorgegebene Simulationsmodell im zweiten Simulator keine ausreichend genaue Beschreibung darstellt.

Aus der Veröffentlichung Campbell S L et al: "A mixed symbolic-numeric software environment" Proceedings of the 1996 IEEE International symposium on computer-aided control system design (CAT. NO. 96TH8136), Proceedings of joint conference on control applications intelligent control and computer-aided control system design, Dearborn, MI, USA, Seiten 436 - 441, XP002138640 1996, New York, NY, USA, IEEE, USA, ISBN: 0-7803-3032-3, ist ein Verfahren bekannt, bei dem symbolische Objekte in numerische Objekte umgewandelt werden. Hierbei wird Maple für die symbolischen und Scilab für die numerischen Berechnungen verwendet. Maple und Scilab werden getrennt behandelt, wobei die Umwandlung durch ein externes Tool bewerkstelligt wird.

Außerdem wird in Ansari A et al: "Process modeller (PROMO)" Simulators international XIV. Proceedings of the 1997 simulation multiconference, simulators international XIV. Proceedings of the 1997 simulation multiconference, Atlanta, GA, USA, 6-10 April 1997, Seiten 137 - 142, XP000886699 1997, San Diego, CA, USA, SCS, USA, ISBN: 1-56555-121-4, eine Software dargestellt, welche eine intuitive graphische Benutzerschnittstelle zur Verfügung stellt, die dem Benutzer eine komfortable Handhabung gewährleistet. Modellparameter und Darstellungen können somit schnell gebildet, definiert und verändert werden. Mit dieser Software können beispielsweise textbasierte Modelle in graphische Darstellungen umgewandelt werden.

Aufgabe ist es, ein Verfahren zu schaffen, der die Übertragung eines Simulationsmodells zwischen zwei verschiedenen Simulatoren erlauben, wobei Informationsgehalt und Genauigkeit erhalten bleiben sollen, sich das dynamische Verhallten nicht ändern soll und weitere Spezifikationsarbeiten an dem Simulationsmodell möglich sein sollen.

Gelöst wird diese Aufgabe durch ein Verfahren zur Übertragung eines ersten Simulationsmodells eines technischen System eines ersten Simulators in ein zweites Simulationsmodell eines zweiten Simulators, so dass sich das dynamische Verhalten nicht ändert und in beiden Simulatoren weitere Spezifikationsarbeiten an dem Simulationsmodell möglich sind, dadurch gekennzeichnet, dass es folgende durch Mittel vor genommene Schritte enthält :
- Trennen des ersten Simulationmodelles mit einer Verarbeitungseinheit in erste interne Basis-Operatoren, die durch den ersten Simulator bereitgestellt werden, und erste Zuordnungsvektoren die die ersten Basis-Operatoren miteinander verbinden, wodurch die Semantik des Simulationmodells bestimmt wird,
- Exportieren der ersten Basis-Operatoren in eine Operatorenbibliothek von Operatoren durch die automatische Erzeugung von Quell-Code für einen externen Operator und Versehen des Quell-Codes mit einem Rahmen in einer Form, dass er durch den zweiten Simulator als externer Basis-Operator semantisch äquivalent eingebunden werden kann, wobei Äquivalenz bedeutet, dass die Funktionalität jedes Basis-Operators in beiden Simulationsmodellen gleich ist und der Operator in beiden Simulationsmodellen das gleiche Verhalten zeigt,

- Exportieren der ersten Zuordnungsvektoren in eine Operarorenzuordnung,
- Lesen der Operatorenzuordnung und Erzeugen eines Zuordnungsvektors, und
- Verbinden der zweiten Operatoren mit den zweiten Zuordnungsvertoren zum Erhalten des zweiten Simulationsmodells in dem zweiten Simulator mit dem gleichen Gesamtverhalten.

Durch diese Maßnahmen wird ein Simulationsmodell geschaffen, das insbesondere in beiden Richtungen, hin- und zurück-übersetzt werden kann, wobei semantische Informationen erhalten bleiben. Dabei ist eine Übertragung möglich, die keinen Unterschied macht, in welchem Simulator spezifiert bzw. simuliert wird.

Das Simulationsmodell wird hierbei in Basisoperatoren zerlegt, die in einer universell simulatorenlesbaren Form in eine Operatorenbibliothek exportiert werden. Die exportierte Operatorenbibliothek liegt vorzugsweise in Form von compiliebaren Quell-Codes vor.

Das zweite Ein/Ausgabemittel kann die Operatorenzuordnung sowohl exportieren als auch importieren, wodurch ein durch den zweiten Simulator entsprechend verändertes Simulationsmodell mit den internen Operatoren des ersten Simulators durch die Verarbeitungseinheit erstellt und über das erste Ein/Ausgabemittel an den ersten Simulator zurück übertragen wird.

Die verfahrensgemäße Aufgabe wird gelöst durch ein Verfahren zur Übertragung eines Simulationsmodells zwischen einem ersten Simulator und einem zweiten Simulator, wobei gemäß der Erfindung das Simulationsmodell des ersten Simulators in seine Operatoren zerlegt und die Operatorenzuordnung gespeichertwird, die Operatoren als Quell-Codes in eine erste exportierte Operatorenbibliothek exportiert und nach Compilation in einer zweiten einbindbaren Operatorenbibliothek so zu externen Operatoren, deren Semantik mit den Operatoren des ersten Simulators übereinstimmen, zusammengefaßt werden, daß sie von dem zweiten Simulator semantisch korrekt eingebunden werden können, und zusätzlich zu der Operatorenbibliothek die Operatorenzuordnung exportiert wird, die sowohl vom ersten Simulator als auch vom zweiten Simulator gelesen werden kann und auf deren Basis das Simulationsmodell erstellt wird.

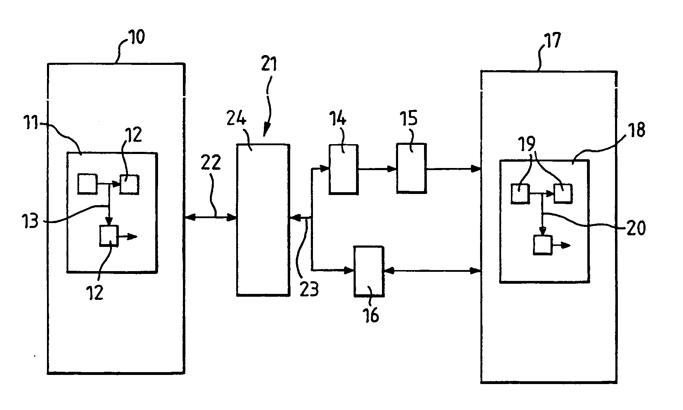

Weitere vorteilhafte Maßnahmen sind in den Unteransprüchen beschrieben. Die Erfindung ist in der beiliegenden Zeichnung dargestellt und wird nachfolgend näher beschrieben.

Die einzige Figur zeigt anhand eines schematischen Schaltbildes zwei Simulatoren, die durch eine.Vorrichtung zur Übertragung von Simulationsmodellen miteinander verbunden sind. Dabei wird das erste Simulationsmodell in Komponenten zerlegt, die wiederum in einer Operatorenbibliothek gespeichert werden. Der zweite Simulator fügt das Simulationsmodell über die einbindbare Operatorenbibliothek mit Hilfe der Operatorenzuordnung zu einem neuen semantisch äquivalenten Modell zusammen.

In der Figur sind zwei Simulatoren 10 und 17 schematisch dargestellt, auf denen Simulationsmodelle 11 und 18 ablaufen. Das erste Simulationsmodell besteht aus internen Operatoren 12, die durch den ersten Simulator 10 bereitgestellt werden. Die Operatoren 12 sind über Zuordnungsvektoren 13 miteinander verbunden, wodurch die Semantik des Simulationsmodells 12 bestimmt wird.

Über ein erstes Ein/Ausgabemittel 22 wird das Simulationsmodell 11 auf eine Vorrichtung zur Übertragung von Simulationsmodellen 21 übertragen. Diese Vorrichtung zur Übertragung von Simulationsmodellen 21 besteht aus einer Verarbeitungseinheit 24 und einem zweiten Ein/Ausgabemittel 23.

Zur Vorbereitung der eigentlichen Übertragung wird durch die Verarbeitungseinheit 24 das erste Simulationsmodell 11 des ersten Simulators 10 in seine Operatoren 12 zerlegt. Die Operatoren 12 werden in eine Operatorenbibliothek 15 so exportiert, daß sie von dem zweiten Simulator 17 semantisch korrekt genutzt werden können. Dies erfolgt in der Regel durch Erzeugung von einem universellen Quell-Code für jeden Operator 12 in der Operatorbibliothek 14. Durch Compilierung entsteht eine einbindbare Operatorenbiblothek 15.

Die eigentliche Übertragung erfolgt durch den Export einer Opratorenzuordnung 16, die sowohl vom ersten Simulator 10 als auch vom zweiten Simulator 17 gelesen und verändert werden kann. Aus dieser Veränderung können neue Zuordnungsvektoren 20 erzeugt werden.

Beide Simulationsmodelle 11 und 18 besitzen eine Reihe von Basis-Operatoren 12. Alle diese Operatoren 12 werden von einem ersten Simulationsmodell 11 mit Hilfe der Vorrichtung zur Übertragung von Simulationsmodellen 21 als Quell-Codes in die Operatorbibliothek 14 exportiert und dann nach Compilierung in die externe Operatorenbibliothek 15 überführt. Von dort können sie in das zweite Simulationsmodell 18 eingebunden werden, um für die Spezifikation des Simulationsmodells 18 verwendet zu werden. Im Detail heißt das, daß vom ersten Simulationsmodell 11 für die einzelnen Operatoren 12 automatisch Quell-Codes in einer Programmiersprache erzeugt werden. Ein solcher Quell-Code wird mit einem äußeren Rahmen versehen, der die Nutzung jedes Operators als externer Operator in dem zweiten Simulationsmodell 18 ermöglicht.

Die Erstellung der externen Operatorenbibliothek 15 aus den internen Operatoren 12 des ersten Simulationsmodells 11 ist eine Art Arbeitsvorbereitung. Der äußere Rahmen leistet zusätzliche Funktionalität um die Anbindung als externer Operator in das zweite Simulationsmodell 18 zu ermöglichen, d.h. um den syntaktischen Erfordernissen des zweiten Simulationsmodells 18 für externe Operatoren zu entsprechen.

Das Spezifizieren eines Simulationsmodells 18 im zweiten Simulator 17 erfolgt nur unter Nutzung der externen Operatorenbibliothek 15. Damit ist die Übertragbarkeit des zweiten Simulationsmodells 18 zu dem ersten Simulator 10 gesichert.

Eine Vorrichtung zur Übertragung von Simulationsmodellen 21 kann das erste Simulationsmodell 11 unter Erzeugung einer Operatorenzuordnung 16 und einer Operatorenbibliothek 14, 15 in das zweite Simulationsmodell 18 übertragen.

Zum Spezifizieren eines Modells kann also entweder in dem ersten Simulator 10 bei der Erzeugung eines Simulationsmodells 11 normal verfahren werden, indem das Modell aus internen Einzeloperatoren 12 erstellt wird. Oder man kann mit dem zweiten Simulator 17 das zweite Simulationsmodell 18 erstellen, indem nur externe Operatoren 19 verwendet werden.

Voraussetzung hierfür ist, daß der zweite Simulator 17 das Einbinden von externen Operatoren 19 aus der externen Operatorenbibliothek 15 in das zweite Simulationsmodell 18 erlaubt. Das gesamte zweite Simulationsmodell 18 besteht folglich aus externen Operatoren 19. Hinter jedem externen Operator 19 verbirgt sich ein interner Operator 12 des ersten Simulationsmodells 11. Damit ist in dem zweiten Simulationsmodell 18 die gleiche Modellierung wie im ersten Simulationsmodell 11 möglich. Jeder Operator 12 bzw. 19 ist in beiden Simulationsmodellen 11 bzw. 18 äquivalent, da er jeweils auf Grundlage des ersten Simulationsmodells 11 basiert.

Äquivalenz bedeutet, daß die Funktionalität jedes Operators 12 und 19 in beiden Simulationsmodellen 11 und 18 gleich ist. Der Operator zeigt in beiden Simulationsmodellen das gleiche Verhalten. Das Gesamtverhalten eines Modells wird infolgedessen gleich sein, da es die Summe der einzelnen Dynamiken darstellt.

Ein Simulationsmodell 19, das im zweiten Simulator 18 spezifiziert wurde, kann zum ersten Simulator 10 übertragen werden, indem jedem externen Operator 19 der entsprechende interne Operator 12 des ersten Simulators zugeordnet wird. Die Zuordnung bereitet keine Schwierigkeiten, da das zweite Simulationsmodell 18 aufgrund der beschriebenen Vorgehensweise nur aus solchen externen Operatoren 19 besteht, für die ein entsprechender interner Operator 12 existiert. Infolgedessen ist eine Übersetzung in beide Richtungen möglich.

Ein Ausführungsbeispiel betrifft die Kopplung von Scade und Simulink. Scade ist ein Codegenerator von Verilog, der aus Spezifikationen von Simulationsmodellen den Quell-Code erzeugt. Ein solcher Quell-Code ist für sicherheitsrelevante Anwendungen, beispielsweise in der Flugzeugindustrie, einsetzbar. Scade hat nur eingeschränkte Möglichkeiten zur Eingabe von Simulationsmodellen und zur Simulation.

Simulink ist ein Simulator von Mathworks, der in vielen Simulationsanwendungen zum Einsatz kommt. Er bietet eine benutzerfreundliche Eingabe von Simulationsmodellen und komfortable Simulation des dynamischen Verhaltens an. Er ist jedoch nicht geeignet, Quell-Codes für sicherheitsrelevante Anwendungen zu erzeugen.

Diese beiden Simulatoren, nämlich Scade und Simulink können mittels des erfindungsgemäßen Verfahrens miteinander gekoppelt werden. Dazu werden für alle von Scade bereitgestellten Operatoren Quell-Codes erzeugt. Ein solcher Quell-Code wird mit entsprechenden Routinen erweitert, so daß man ihn als externen Operator in Simulink verwenden kann.

Dies wird für jeden Operator einzeln vorgenommen. In dieser Weise wird eine Operatorenbibliothek 15 erstellt, mit der Modelle in Simulink spezifiziert werden können. Die Spezifizierung erfolgt in der komfortablen Umgebung von Simulink und das dynamische Verhalten des Modells kann in Simulink analysiert werden.

Für die Erzeugung von Quell-Codes für sicherheitsrelevante Anwendungen muß ein Simulationsmodell für Scade erzeugt werden. Dazu wird die Modellbeschreibung von Simulink nach Scade übersetzt. Dabei wird jedem Operator der entsprechende Ursprungsoperator von Scade zugeordnet. Zwischen den Operatoren 11 und 19 beider Modelle besteht eine eindeutige Zuordnung. Beide Modelle zeigen das gleiche dynamische Verhalten, das in beiden Fällen auf dem von Scade erzeugten Code beruht.

### Literaturverzeichnis

[COMITY98] "Codesign Method and Integrated Tools for Advanced Embedded System (COMITY)" (Project reference 23015). EU-gefördertes Projekt im Rahmen von "Esprit 4", Teil des vierten Rahmenprogrammes der EU. Unterprogramm: "Software Technologies -Software Intensive Systems Engineering".
[Ernst86] Johannes Ernst, "Data Interoperability between CACSD and CASE Tools Using the CDIF Family of Standardsu. Proc. of 1986 IEEE Int. Symp. on Computer-Aided Control System Design, Dearborn, MI. 1986.
[CD1F97] Internet Addresse: http://www.cdif.org/, Post-Addresse: CDIF, Electronic Industries Association, c/o Patti A. Rusher, Director,
   Electronic Information Group, 2500 Wilson Bivd., Arlington, VA 22201, USA. Phone: +1 (703) 907 7545, Fax: +1 (703) 907 7501.

## Patentansprüche

1. Verfahren zur Übertragung eines ersten Simulationsmodells (11) eines technischen Systems eines ersten Simulators (10) in ein zweites Simulationsmodell (18) eines zweiten Simulators (17), so dass sich das dynamische Verhalten nicht ändert und in beiden Simulatoren weitere Spezifikationsarbeiten an dem Simulationsmodell möglich sind, **dadurch gekennzeichnet, dass** es folgende durch Mittel vorgenommene Schritte enthält
- Trennen des ersten Simulationmodelles (11) mit einer Verarbeitungseinheit (24) in erste interne Basis-Operatoren (12), die durch den ersten Simulator (10) bereitgestellt werden, und erste Zuordnungsvektoren (13) die die ersten Basis-Operatoren (12) miteinander verbinden, wodurch die Semantik des Simulationmodells (11) bestimmt wird,
- Exportieren der ersten Basis-Operatoren (12) in eine Operatorenbibliothek (15) von Operatoren durch die automatische Erzeugung von Quell-Code für einen externen Operator und Versehen des Quell-Codes mit einem Rahmen in einer Form, dass er durch den zweiten Simulator (17) als externer Basis-Operator (19) semantisch äquivalent eingebunden werden kann, wobei Äquivalenz bedeutet, dass die Funktionalität jedes Basis-Operators (12, 19) in beiden Simulationsmodellen (11, 18) gleich ist und der Operator in beiden Simulationsmodellen das gleiche Verhalten zeigt,
- Exportieren der ersten Zuordnungsvektoren (13) in eine Operatorenzuordnung (16),
- Lesen der Operatorenzuordnung (16) und Erzeugen eines Zuordnungsvektors (20), und
- Verbinden der zweiten Operatoren (19) mit den zweiten Zuordnungsvektoren (20) zum Erhalten des zweiten Simulationsmodells (18) in dem zweiten Simulator mit dem gleichen Gesamtverhalten.

2. Verfahren nach Anspruch 1, **dadurch gekennzeichnet, daß** die ersten Operatoren (12) in der Form von kompilierbaren Quell-Coden vorliegen und durch Kompilierung in die zweiten Operatoren (19) umgewandelt werden.

3. Verfahren nach Anspruch 1, mit Rücktransformieren des zweiten Simulationsmodelles (18) in das erste Simulationsmodell (11), **dadurch gekennzeichnet, daß** es die folgenden Schritte enthält:
- Transformieren der zweiten Zuordnungsvektoren (20) zurück in erste Zuordnungsvektoren (13), und
- Verbinden der ersten Operatoren mit den so erhaltenen ersten Assoziationsvektoren (13).

## Claims

1. A method for transmitting a first simulation model (11) of a technical system of a first simulator (10) to a second simulation model (18) of a second simulator (17), so that the dynamic behaviour does not change and that in both simulators, other specification operations on the simulation model can be executed, **characterized in that** it includes the following steps implemented by means of:
- separating the first simulation model (11) using a processing unit (24) into first internal base operators (12) supplied by the first simulator (10) and into association vectors (13) linking the first base operators (12) together, which makes it possible to define the semantics of the simulation model (11),
- exporting the first base operators (12) to an operator library (15) through the automatic production of a source code for an external operator and providing the source code with a frame having such a form that it can be integrated in a semantically equivalent way by the second simulator (17) as an external base operator (19), the equivalence meaning that the functionality of each base operator (12, 19) in both simulation models (11, 18) is identical and that the operator in both simulation models has the same behaviour,
- exporting the first association vectors (13) to an association of operators (16),
- reading the association of operators (16) and producing an association vector (20), and
- linking the second operators (19) with the second association vectors (20) so as to obtain the second simulator model (18) in the second simulator with the same comprehensive behaviour.

2. A method according to claim 1, **characterized in that** the first operators (12) are in the form of compilable source codes and are converted into second operators (19) by compilation.

3. A method according to claim 1, including the step of the new transformation of the second simulation model (18) into a first simulation model (11), **characterized in that** it includes the following steps:
- transforming the second association vectors (2) back into first association vectors (13), and
- linking the first operators with the first association vectors (13) thus obtained.

## Revendications

1. Procédé de transmission d'un premier modèle de simulation (11) d'un système technique d'un premier simulateur (10) dans un second modèle de simulation (18) d'un second simulateur (17), de sorte que le comportement dynamique ne change pas et que dans les deux simulateurs, d'autres opérations de spécification sur le modèle de simulation soient possibles, **caractérisé en ce qu'**il comprend les étapes suivantes, mises en oeuvre par des moyens, de
- séparer le premier modèle de simulation (11) au moyen d'une unité de traitement (24) en premiers opérateurs de base internes (12) fournis par le premier simulateur (10) et en premiers vecteurs d'association (13) reliant ensemble les premiers opérateurs de base (12), ce qui permet de définir la sémantique du modèle de simulation (11),
- exporter les premiers opérateurs de base (12) dans une bibliothèque d'opérateurs (15) par la production automatique d'un code source pour un opérateur externe et le fait de pourvoir le code source d'un cadre sous une forme, de sorte qu'il puisse être intégré d'une manière sémantiquement équivalente par le second simulateur (17) en tant qu'opérateur de base externe (19), l'équivalence signifiant que la fonctionnalité de chaque opérateur de base (12, 19) dans les deux modèles de simulation (11, 18) est identique et que l'opérateur dans les deux modèles de simulation présente le même comportement,
- exporter les premiers vecteurs d'association (13) dans une association d'opérateurs (16),
- lire l'association d'opérateurs (16) et la production d'un vecteur d'association (20), et
- lier les seconds opérateurs (19) aux seconds vecteurs d'association (20) pour obtenir le second modèle de simulateur (18) dans le second simulateur avec le même comportement global.

2. Procédé selon la revendication 1, **caractérisé en ce que** les premiers opérateurs (12) se présentent sous la forme de codes source compilables et sont convertis par compilation en seconds opérateurs (19).

3. Procédé selon la revendication 1, comprenant l'étape de nouvelle transformation du second modèle de simulation (18) en premier modèle de simulation (11), **caractérisé en ce qu'**il comprend les étapes suivantes :
- la transformation des seconds vecteurs d'association (20) à nouveau en premiers vecteurs d'association (13), et
- la liaison des premiers opérateurs aux premiers vecteurs d'association (13) ainsi obtenus.
